# EUROPÄISCHE PATENTANMELDUNG

(11) **EP 3 450 354 A1**
(43) Veröffentlichungstag der Anmeldung: **06.03.2019**
(21) Anmeldenummer: 18189023.7
(22) Anmeldetag: 14.08.2018
(51) Int. Cl.: B65G 9/00, E01B 25/34, H02K 33/18

(54) **WEICHE FÜR EINEN SCHIENENFÖRDERER UND SCHIENENFÖRDERER MIT EINER WEICHE**

(30) Priorität: 30.08.2017 DE 102017119893
(71) Anmelder: Novomotec GmbH, 85521 Hohenbrunn-Riemerling Bayern (DE)
(72) Erfinder: Neudecker, Martin, 80538 München (DE)
(74) Vertreter: Keilitz, Wolfgang

(57) **Zusammenfassung**

Die Erfindung betrifft Weiche (1) für einen Schienenförderer, mit dem ein Transportgut, wie z. B. Kleider, hängend entlang einer Schiene (14) transportiert werden, wobei die Weiche (1) ein schwenkbar gelagertes Schienenstück (3) umfasst, das zwischen einer ersten und einer zweiten Position verstellbar ist. Gemäß der Erfindung umfasst die Weiche (1) einen Stellantrieb (15) zum Verstellen des Schienenstücks (3), der eine beweglich angeordnete Spule (9) und einen feststehend angeordneten Permanentmagneten (10) aufweist. Sobald die Spule(n) bestromt wird / werden, entsteht in der Spulen-Magnet-Anordnung eine Lorentzkraft, die dazu führt, dass sich die Spule(n) (9) quer zu ihrer Spulenachse relativ zum Permanentmagneten (10) bewegt bzw. bewegen. Die Spule (9) ist mit dem Schienenstück (3) mechanisch gekoppelt und somit in der Lage, die Weiche (1) zu betätigen..

## Beschreibung

### HINTERGRUND DER ERFINDUNG

Die Erfindung betrifft eine Weiche für einen Schienenförderer, mit dem ein Transportgut, wie z. B. Kleider, hängend entlang einer Schiene transportiert werden können.

Derartige Schienenförderer - die auch als Hängeförderer bezeichnet werden - werden beispielsweise in Wäschereien oder Konfektionsbetrieben eingesetzt, um Kleidungsstücke hängend zu transportieren. Sie werden aber auch in Industriebetrieben eingesetzt, um Werkstücke hängend zu verschiedenen Bearbeitungsstationen zu transportieren, in denen die Werkstücke in aufeinanderfolgenden Prozessschritten bearbeitet werden.

Bekannte Schienenförderer sind üblicherweise an der Decke montiert und umfassen Weichen, mit denen die transportierten Produkte auf verschiedene Bahnen umgelenkt werden können. Jede Weiche hat ein schwenkbares Schienenstück, das zwischen zwei oder mehr Positionen hin und her beweglich ist. Die aus dem Stand der Technik bekannten Weichen werden meist pneumatisch mittels eines Pneumatikzylinders angetrieben. Ein pneumatischer Antrieb hat allerdings den Nachteil, dass er relativ teuer und laut ist. Darüber hinaus verursacht ein pneumatischer Antrieb auch relativ hohe Betriebskosten.

Aus der GB 1 209 410 A ist beispielsweise eine Weiche für einen Schienenförderer bekannt, mit dem ein Transportgut hängend entlang einer Schiene transportiert werden kann. Zum Verstellen des Schienenstücks ist ein elektromechanischer Stellantrieb vorgesehen, der eine Spule und einen Permanentmagneten aufweist. Der dort vorgeschlagene Stellantrieb benötigt jedoch relativ viel Bauraum und hohe Betriebskosten, das die Spule dauerhaft bestromt werden muss.

Die DE 10 70 103 B beschreibt einen anderen Schienenförderer mit einem elektromechanischen Stellantrieb, der ähnliche Nachteile aufweist. Schließlich ist aus der JP 2005 - 306 551 A noch ein Stellantrieb für eine Fördereinrichtung bekannt, der eine Spule und einen Permanentmagneten aufweist, wobei die Spule so angeordnet ist, dass nur ein Teil der Spule im Bereich des vom Permanentmagneten erzeugten Magnetfeldes liegt. Sobald die Spule bestromt wird, bewegt sich der Permanentmagnet unter Einwirkung der Lorentzkraft quer zur Spulenachse.

### AUFGABE DER ERFINDUNG

Es ist daher die Aufgabe der vorliegenden Erfindung, eine Weiche für einen Schienenförderer zu schaffen, die günstiger und leiser ist und darüber hinaus weniger Betriebskosten verursacht.

Gelöst wird diese Aufgabe gemäß der Erfindung durch die im Patenanspruch 1 angegebenen Merkmale. Weitere Ausgestaltungen der Erfindung ergeben sich aus den Unteransprüchen.

Gemäß der Erfindung wird eine Weiche für einen Schienenförderer vorgeschlagen, die ein schwenkbar gelagertes Schienenstück umfasst, das zwischen einer ersten und einer zweiten (und ggf. weiteren) Position(en) verstellbar ist. Die erfindungsgemäße Weiche umfasst ferner einen elektromechanischen Stellantrieb zum Verstellen des Schienenstücks, wobei der Stellantrieb mindestens eine beweglich angeordnete Spule und mindestens einen feststehend angeordneten Permanentmagneten aufweist. Sobald die Spule(n) bestromt wird / werden, entsteht in der Spulen-Magnet-Anordnung eine Lorentzkraft, die dazu führt, dass sich die Spule(n) quer zu ihrer Spulenachse relativ zum Permanentmagneten bewegt bzw. bewegen. Die Spule ist mit dem Schienenstück mechanisch gekoppelt und somit in der Lage, die Weiche zu betätigen. Der Stellantrieb kann auf diese Weise sehr flach ausgeführt werden und benötigt sehr wenig Bauraum. Darüber hinaus ist ein solcher Stellantrieb sehr kostengünstig, leise und verursacht relativ geringe Betriebskosten.

Die Spule(n) und der/die Permanentmagnet(en) sind vorzugsweise so angeordnet, dass wenigstens eines der beiden Teile eine lineare Bewegung entlang einer Geraden ausführt.

Gemäß einer bevorzugten Ausführungsform der Erfindung ist die wenigstens eine Spule und der wenigstens eine Permanentmagnet so angeordnet, dass die Spulenachse der Spule und die Polarisationsrichtung des Permanentmagneten im Wesentlichen parallel zueinander verlaufen. Die vorstehend beschriebene, durch die Lorentzkraft ausgelöste Relativbewegung zwischen Spule und Permanentmagnet erfolgt im Wesentlichen quer zur Spulenachse bzw. quer zur Polarisationsrichtung.

Die Spule(n) des Stellantriebs ist / sind vorzugsweise so angeordnet, dass ihre Spulenachse in einem an der Decke montierten Zustand der Weiche im Wesentlichen in vertikaler Richtung zeigt. Dadurch kann der Stellantrieb sehr flach ausgeführt werden und benötigt sehr wenig Bauraum.

Gemäß einer ersten Ausführungsform der Erfindung ist der Permanentmagnet / sind die Permanentmagneten feststehend und die Spule(n) beweglich angeordnet. Alternativ könnte aber auch die Spule(n) feststehend und der / die Permanentmagnet(en) beweglich angeordnet sein. Das bewegliche Element ist vorzugsweise mit dem schwenkbaren Schienenstück der Weiche mechanisch gekoppelt und somit in der Lage, die Weiche zu betätigen.

Gemäß einer bevorzugten Ausführungsform der Erfindung umfasst die Weiche eine Basis, die im montierten Zustand eine der Decke zugewandte Seite und eine dem Boden zugewandte Seite aufweist, wobei an letzterer das schwenkbar gelagerte Schienenstück montiert ist. Die Spule(n) und/oder der /die Permanentmagnet(en) ist/sind vorzugsweise wenigstens teilweise in der Basis integriert.

Gemäß einer speziellen Ausführungsform der Weiche ist / sind die Spule(n) und/oder der / die Permanentmagnet(en) so in der Weiche angeordnet, dass die Spule(n) bzw. der / die Permanentmagnet(en) in einem an der Decke montierten Zustand oberhalb des schwenkbar gelagerten Schienenstücks angeordnet ist.

Die erfindungsgemäße Weiche umfasst vorzugsweise auch ein Getriebe, das mit dem schwenkbar gelagerten Schienenstück gekoppelt ist. Antriebsseitig ist das Getriebe je nach Ausführungsform entweder mit der / den Spule(n) oder dem / den Permanentmagneten gekoppelt.

Gemäß einer bevorzugten Ausführungsform der Erfindung umfasst der Stellantrieb zum Betätigen der Weiche genau eine Spule. In diesem Fall wird die Spule vorzugsweise in einer ersten Richtung bestromt, um die Weiche in die erste Position zu bringen, und mit umgekehrter Polarität bestromt, um die Weiche in die zweite Position zu bringen.

Wahlweise kann der Stellantrieb aber auch mehrere Spulen umfassen. Bei einer Ausführungsform mit zwei Spulen kann beispielsweise eine erste der Spulen dafür vorgesehen sein, das schwenkbare Schienenstück von der ersten Position in die zweite Position zu bewegen, und die zweite der Spulen dafür vorgesehen sein, das schwenkbare Schienenstück von der zweiten Position in die erste Position zurück zu bewegen.

Eine weitere mögliche Ausführungsform des Stellantriebes umfasst pro Spule zwei gegensinnig polarisierte Permanentmagnete, die an verschiedenen Spulenabschnitten angeordnet sind. Der Ort der Permanentmagnete ist dabei vorzugsweise so gewählt, dass die durch die Permanentmagnete erzeugten Lorentzkräfte in die gleiche Richtung wirken und sich die Antriebskräfte somit addieren. Die Gesamtkraft des Stellantriebs kann dadurch im günstigsten Fall verdoppelt werden. Gemäß einer Ausführungsform der Erfindung ist z. B. ein magnetischer Nordpol an einem vorderen Spulenabschnitt und ein magnetischer Südpol an einem hinteren Spulenabschnitt angeordnet. Aufgrund der entgegensetzten Strom-Flussrichtung an den beiden Orten und der umgekehrten Polung der Permanentmagnete wirken die Lorentzkräfte in die gleiche Richtung. Die Spule kann z. B. rund sein. Gemäß einer bevorzugten Ausführungsform der Erfindung ist die Spule aber rechteckig geformt, bzw. der im Bereich des Magnetfelds befindliche Spulenabschnitt ist vorzugsweise gerade.

Die Erfindung betrifft ferner einen Schienenförderer, mit dem ein Transportgut, wie z. B. Kleider, hängend entlang einer Schiene transportiert werden kann, wobei der Schienenförderer wenigstens eine Weiche umfasst, wie sie vorstehend beschrieben wurde.

### Kurze Beschreibung der Zeichnungen

Die Erfindung wird nachstehend anhand der beigefügten Zeichnungen beispielhaft näher erläutert. Es zeigen:
- Fig. 1: eine Ansicht auf eine Weiche für einen Schienenförderer von unten; und
- Fig. 2: eine Schnittansicht der Weiche von Fig. 1.

### AUSFÜHRUNGSFORMEN DER ERFINDUNG

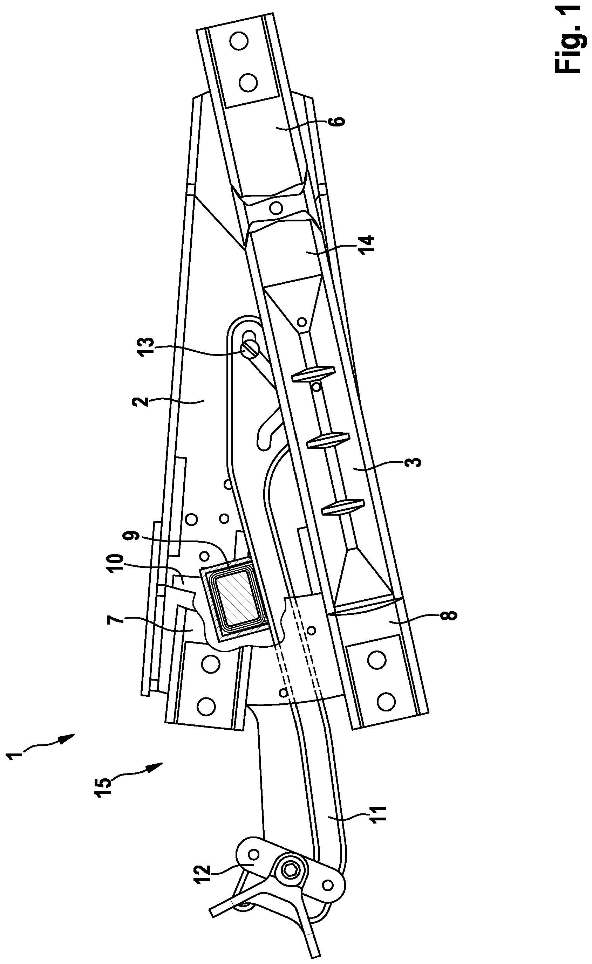

Fig. 1 zeigt eine Weiche 1 für einen Schienenförderer gemäß einer Ausführungsform der Erfindung. Die Weiche hat im dargestellten Ausführungsbeispiel drei Anschlüsse 6, 7, 8, an denen die Weiche 1 an ein Schienennetz des Schienenförderers angeschlossen werden kann. Die mit dem Schienenförderer transportierten Güter können somit auf verschiedene Bahnen verteilt (bei einer Transportrichtung von rechts nach links) oder von verschiedenen Bahnen auf eine einzige Sammelschiene geleitet werden (bei einer Transportrichtung von links nach rechts).

Die Weiche 1 umfasst ferner ein schwenkbar gelagertes Schienenstück 3, das zwischen zwei Positionen - entsprechend dem zweiten Anschluss 7 und dem dritten Anschluss 8 - hin und her geschwenkt werden kann, um den betreffenden Anschluss 7, 8 mit dem ersten Anschluss 6 zu verbinden.

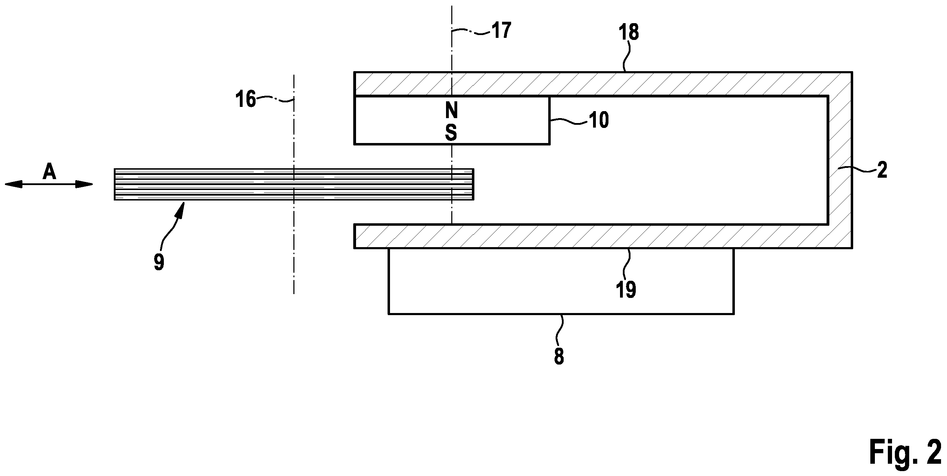

Ein elektromechanischer Stellantrieb zum Betätigen der Weiche 1 ist insgesamt mit dem Bezugszeichen 15 bezeichnet. Der Stellantrieb 15 umfasst hier eine Spule 9 und einen Permanentmagneten 10, die so angeordnet sind, dass nur ein Teil der Spule im Bereich des vom Permanentmagneten 10 erzeugten Magnetfeldes liegt, wogegen ein anderer Teil der Spule 9 außerhalb des Magnetfeldes liegt. Wird nun die Spule 9 mit Strom beaufschlagt, wirkt auf sie eine Lorentzkraft, die die Spule 9 quer zum Magnetfeld des Permanentmagneten 10 bewegt. Die Bewegung der Spule wird dabei über ein Getriebe mit einem Getriebehebel 11 auf das Schienenstück 3 übertragen, wodurch es in die jeweils andere Position verstellt wird. Die genaue Funktionsweise des Stellantriebs 15 wird nachfolgend anhand von Fig. 2 noch ausführlich erläutert.

Fig. 2 zeigt eine Schnittansicht der Weiche 1 von Fig. 1, in der insbesondere der Stellantrieb 15 der Weiche 1 gut zu erkennen ist.

Der Stellantrieb 15 umfasst, wie bereits erwähnt, eine beweglich angeordnete Spule 9 sowie einen fest an der Weiche 1 angeordneten Permanentmagneten 10. Die Spule 9 ist im Wesentlichen planar und hat eine Spulenachse 16. Der Permanentmagnet 10 hat eine durch seine Pole N und S vorgegebene Polarisationsrichtung, die hier mit dem Bezugszeichen 17 gekennzeichnet ist. Wie zu erkennen ist, sind die Spule 9 und der Permanentmagnet 10 so angeordnet, dass die Spulenachse 16 der Spule 9 und die Polarisationsrichtung 17 des Permanentmagneten 10 im Wesentlichen parallel zueinander verlaufen. Die Spulenachse 16 und die Polarisationsrichtung 17 zeigen dabei in die vertikale Richtung.

Wird nun die Spule 9 bestromt, wird sie, je nach Polung, in ihrer Ebene nach rechts oder links bewegt. Die Bewegungsrichtung ist dabei durch einen Pfeil A gekennzeichnet. Im dargestellten Ausführungsbeispiel führt die gesamte Spule 9 eine lineare Bewegung entlang einer Geraden aus. Diese Bewegung wird dann mittels eines Getriebes auf das schwenkbar gelagerte Schienenstück 3 übertragen.

Alternativ könnte natürlich auch die Spule 9 feststehend und der Permanentmagnet 10 beweglich angeordnet sein.

Wie in den Figuren 1 und 2 ferner zu sehen ist, umfasst die Weiche 1 eine Basis 2, die dazu ausgestattet ist, z. B. mittels Schrauben an einer Decke eines Raumes befestigt zu werden. Die Basis 2 hat eine der Decke zugewandte Seite 18 und eine dem Boden zugewandte Seite 19, an der die Weichen-Anschlüsse 6, 7, 8 und das schwenkbar gelagerte Schienenstück 3 montiert sind. Die Spule 9 und der Permanentmagnet 10 sind teilweise in der Basis 2 integriert und befinden sich, wenn die Weiche 1 an einer Decke montiert ist, vollständig oberhalb der Anschlüsse 6, 7, 8.

Das vorstehend genannte Getriebe umfasst im dargestellten Ausführungsbeispiel einen Schwenkhebel 12, an dem die Spule 9 befestigt ist, einen mit dem Schwenkhebel 12 gelenkig verbundenen Getriebehebel 11, der an seinem anderen Ende (in Fig. 1 rechts) eine Führungsnut aufweist, in die ein Führungszapfen 13 eingreift.

Bei der in den Figuren 1 und 2 dargestellten Ausführungsform umfasst die Weiche 1 genau eine Spule 9, die das Schienenstück 3 sowohl von der ersten Position (entsprechend dem zweiten Anschluss 7) in die zweite Position (entsprechend dem dritten Anschluss 8) als auch zurück in die erste Position verstellen kann. Hierzu wird die Spule 9 in unterschiedlichen Richtungen bestromt. Alternativ könnte der Stellantrieb 15 aber auch mehrere Spulen 9 umfassen. Eine erste Spule 9 könnte beispielsweise dazu vorgesehen sein, das schwenkbar gelagerte Schienenstück 3 von der ersten in die zweite Position zu verstellen, und eine zweite Spule könnte vorgesehen sein, um das Schienenstück 3 von der zweiten Position in die erste Position zurückzustellen.

Eine Weiche 1 mit einem derartigen Stellantrieb 15 ist besonders einfach aufgebaut und kostengünstig in der Herstellung als auch im Betrieb und benötigt nur einen geringen Bauraum.

## Patentansprüche

1. Weiche (1) für einen Schienenförderer, mit dem ein Transportgut, wie z. B.
Kleider, hängend entlang einer Schiene (14) transportiert werden kann, wobei die Weiche (1) ein schwenkbar gelagertes Schienenstück (3) umfasst, das zwischen einer ersten und einer zweiten Position verstellbar ist, **dadurch gekennzeichnet, dass**
- ein Stellantrieb (15) zum Verstellen des Schienenstücks (3) vorgesehen ist, der eine beweglich angeordnete Spule (9) und einen fest angeordneten Permanentmagneten (10) aufweist,
- die Spule (9) mit dem Schienenstück (3) mechanisch gekoppelt ist;
- und dass sich die Spule (9) in einer zur Spulenachse (16) quer verlaufenden Richtung bewegt, wenn sie bestromt wird, und dadurch die Weiche (1) betätigt.

2. Weiche (1) nach Anspruch 1, **dadurch gekennzeichnet, dass** die Spule (9) und der Permanentmagnet (10) derart angeordnet sind, dass die Spulenachse (16) der Spule (9) und die Polarisationsrichtung (17) des Permanentmagneten (10) im Wesentlichen parallel zu einander verlaufen.

3. Weiche (1) nach Anspruch 1 oder 2, **dadurch gekennzeichnet, dass** die Spule (9) und der Permanentmagnet (10) so angeordnet sind, dass nur ein Teil der Spule (9) im Bereich des vom Permanentmagneten (10) erzeugten Magnetfeldes liegt.

4. Weiche (1) nach einem der vorhergehenden Ansprüche, **dadurch gekennzeichnet, dass** die Spule (9) und der Permanentmagnet (10) so angeordnet sind, dass wenigstens eines der beiden Teile eine lineare Bewegung entlang einer Geraden ausführt, wenn die Spule (9) bestromt wird.

5. Weiche (1) nach einem der vorhergehenden Ansprüche, **dadurch gekennzeichnet, dass** sie eine Basis (2) umfasst, die im montierten Zustand eine der Decke zugewandte Seite und eine dem Boden zugewandte Seite, an der das schwenkbar gelagerte Schienenstück (3) montiert ist, aufweist, wobei die Spule (9) und/oder der Permanentmagnet (10) wenigstens teilweise in der Basis (2) integriert ist.

6. Weiche (1) nach einem der vorhergehenden Ansprüche, **dadurch gekennzeichnet, dass** die Spule (9) und/oder der Permanentmagnet (10) in einem an einer Decke montierten Zustand oberhalb des schwenkbar gelagerten Schienenstücks (3) angeordnet ist bzw. sind.

7. Weiche (1) nach einem der vorhergehenden Ansprüche, **dadurch gekennzeichnet, dass** der Stellantrieb (15) ein Getriebe umfasst, das mit dem schwenkbar gelagerten Schienenstück (3) gekoppelt ist, und dass die Spule (9) oder der Permanentmagnet (10) mit dem Getriebe gekoppelt ist, um das Schienenstück (3) anzutreiben.

8. Weiche (1) nach einem der vorhergehenden Ansprüche, **dadurch gekennzeichnet, dass** der Stellantrieb (15) genau eine Spule (9) umfasst.

9. Weiche (1) nach einem der Ansprüche 1 bis 7, **dadurch gekennzeichnet, dass** der Stellantrieb (15) zwei Spulen (9) umfasst, wobei eine erste der Spulen (9) dazu dient, das Schienenstück (3) von der ersten Position in die zweite Position, und die Zweite der Spulen (9) dazu dient, das Schienenstück (3) von der zweiten Position zurück in die erste Position zu bewegen.

10. Weiche (1) nach einem der vorhergehenden Ansprüche, **dadurch gekennzeichnet, dass** pro Spule (9) wenigstens zwei, vorzugsweise gegensinnig polarisierte, Permanentmagnete (10) vorgesehen sind, die an verschiedenen Abschnitten der Spule (9) angeordnet sind.

11. Schienenförderer zum Transportieren von Transportgut, wie z. B. Kleidern, mit einer Schiene (14), entlang derer das Transportgut hängend transportiert wird, **gekennzeichnet durch** eine Weiche (1) nach einem der vorhergehenden Ansprüche.
